# DEMANDE DE BREVET EUROPEEN

(11) **EP 1 541 419 A1**
(43) Date de publication de la demande: **15.06.2005**
(21) Numéro de dépôt: 04364076.2
(22) Date de dépôt: 10.12.2004
(51) Int. Cl.: B60R 13/02, B60J 1/20

(54) **Dispositif enjoliveur pour store de véhicule, agrafe et véhicule correspondants**

(30) Priorité: 12.12.2003 FR 0314650; 23.12.2003 FR 0315344
(71) Demandeur: WAGON SAS, 79302 Bressuire Cédex (FR)
(72) Inventeur: Jincheleau, Michel, 79320 Moncoutant (FR)
(74) Mandataire: Bioret, Ludovic

(57) **Abrégé**

Dispositif enjoliveur pour store de véhicule, agrafe et véhicule correspondants.

L'invention concerne un dispositif enjoliveur destiné à être monté sur une fente de passage (26) d'une toile d'occultation (251) , ménagée dans la garniture (24) d'un véhicule, ledit dispositif comprenant un enjoliveur (11) présentant au moins une portion visible (111) venant prendre appui sur ladite garniture (24) et au moins une portion de maintien (112), pénétrant à l'intérieur de ladite fente (26), comprenant au moins une agrafe de fixation (12), venant solidariser au moins une desdites portions de maintien (112) avec un bord correspondant de ladite garniture (24).

## Description

Le domaine de l'invention est celui des stores d'occultation pour véhicule, notamment pour les portières ou les lunettes arrière, et plus généralement dans tous les cas où le store circule au travers d'une fente réalisée dans un matériau relativement souple, tel que la garniture intérieure du véhicule. Plus précisément, l'invention concerne les stores rétractables, notamment à enrouleur, que l'utilisateur peut déployer, en particulier pour se protéger du soleil.

Classiquement, les portières de véhicule présentent un panneau de porte, sur lequel est montée une vitre, par exemple fixe ou coulissante. Le panneau de porte comprend généralement une partie tôlée, sur sa face extérieure, correspondant à la carrosserie du véhicule, et une garniture de porte sur sa face intérieure, également appelée panneau intérieur.

On notera que le terme « portière » englobe ici les deux ou quatre portières d'un véhicule, mais également, par extension, d'éventuelles parties fixes de carrosserie portant une vitre (cas par exemple des vitres arrière d'un véhicule à deux portes, ou d'un véhicule utilitaire, ou de la vitre arrière d'un véhicule) et les autres parties mobiles, telles que les hayons. On utilise par la suite le terme « portière » pour des raisons de simplicité, mais il est clair que l'invention s'applique à tout type d'ouverture ménagée dans un véhicule.

Ainsi, en particulier, l'invention s'applique également aux stores de lunette arrière, montés sur une tablette arrière d'un véhicule.

Dans le cas d'une portière, le store est généralement monté sur un tube d'enroulement, logé à l'intérieur du panneau de porte. Une fente est ménagée dans la partie supérieure de la garniture de ce panneau de porte, permettant le passage de la toile d'occultation, et son déploiement.

Généralement, pour des raisons notamment d'efficacité et d'esthétique, un enjoliveur est rapporté sur cette fente. Un des enjoliveurs présente une surface visible, venant prendre appui sur la garniture, et une portion pénétrant à l'intérieur de la fente définie dans la garniture.

Du fait notamment de la souplesse et de la relative fragilité du matériau formant la garniture, il est peu aisé de solidariser de façon simple et efficace cet enjoliveur à cette garniture. Généralement, l'enjoliveur est introduit à force, mais l'efficacité de cette solution n'est pas très bonne, et s'avère peu fiable dans le temps. Cependant, le matériau de la garniture rend difficile la mise en oeuvre de moyens simples de solidarisation, comme le collage.

Un autre inconvénient des enjoliveurs connus est qu'ils peuvent être agressifs vis-à-vis de la toile, lors de son déploiement ou de son repliement, et donc user cette dernière.

Les mêmes problèmes se rencontrent pour d'autres stores, et notamment ceux équipant les tablettes arrière de véhicule.

L'invention a notamment pour objectif de pallier ces inconvénients de l'art antérieur.

Plus précisément, un objectif de l'invention est de fournir une technique permettant une mise en oeuvre d'un enjoliveur de fente sur la garniture d'une portière qui soit efficace et fiable dans le temps.

Un autre objectif de l'invention est de fournir une telle technique, qui soit simple à mettre en oeuvre, et peu coûteuse.

Selon un aspect particulier de l'invention, un autre objectif est également de fournir une telle technique permettant de limiter ou supprimer l'usure de la toile lors de son déploiement ou de son repliement.

Ces objectifs, ainsi que d'autres qui apparaîtront plus particulièrement par la suite, sont atteints à l'aide d'un dispositif enjoliveur destiné à être monté sur une fente de passage d'une toile d'occultation, ménagée dans la garniture d'un véhicule, ledit dispositif comprenant un enjoliveur présentant au moins une portion visible venant prendre appui sur ladite garniture et au moins une portion de maintien, pénétrant à l'intérieur de ladite fente.

Selon l'invention, ledit dispositif comprend au moins une agrafe de fixation, venant solidariser au moins une desdites portions de maintien avec un bord correspondant de ladite garniture (c'est-à-dire un matériau relativement souple et fragile, correspondant par exemple à la garniture intérieure d'une portière, d'un hayon ou d'un pavillon, ou à une tablette arrière du véhicule).

Ainsi, la mise en place et le maintien de l'enjoliveur sont assurés de façon simple et efficace, et présentent une bonne tenue dans le temps. L'assemblage s'effectue facilement, sans moyens particuliers.

De façon avantageuse, la ou lesdites agrafes présentent, sur au moins une portion de leur surface, un revêtement de protection de ladite toile. Ledit revêtement peut notamment être de la feutrine ou un flocage.

De façon préférentielle, la ou lesdites agrafes sont solidarisées audit enjoliveur par clippage.

Avantageusement, la ou lesdites portions de maintien comprennent des moyens d'ancrage avec la ou lesdites agrafes.

De même, à titre alternatif ou complémentairement, la ou lesdites agrafes comprennent des moyens d'ancrage avec la ou lesdites agrafes la ou lesdites portions de maintien.

Notamment, la ou lesdites agrafes et la ou lesdites portions de maintien peuvent comprendre des moyens d'ancrage complémentaires.

De façon avantageuse, lesdits moyens d'ancrage comprennent des bossages, des creux, des portions en dépouille ou en contre-dépouille et/ou des portions repliées.

Selon un mode de réalisation préférentiel de l'invention, le dispositif comprend deux agrafes, s'étendant chacune sur la majeure partie d'un bord de ladite fente.

Un tel dispositif enjoliveur peut notamment être destiné à équiper une portière ou une tablette arrière dudit véhicule.

L'invention concerne également les agrafes pour les dispositifs enjoliveur tels que décrits ci-dessus.

L'invention concerne encore les véhicules automobiles comprenant au moins un dispositif enjoliveur tel que décrit ci-dessus.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, parmi lesquels :
- la figure 1 présente un enjoliveur et une agrafe correspondante, selon l'invention ;
- la figure 2 illustre, en coupe, un enjoliveur selon l'invention, monté sur la garniture d'une portière de véhicule.

L'invention propose donc une approche nouvelle de la mise en oeuvre des enjoliveurs de store dans un véhicule, notamment sur la garniture d'une portière ou sur une tablette arrière. Contrairement aux techniques antérieures, selon lesquelles un tel enjoliveur est introduit à force dans une force préalablement prévue à cet effet dans la garniture, l'invention prévoit la mise en oeuvre d'une ou plusieurs agrafes, conformées de façon à solidariser de façon efficace l'enjoliveur sur les bords de la garniture définissant la fente.

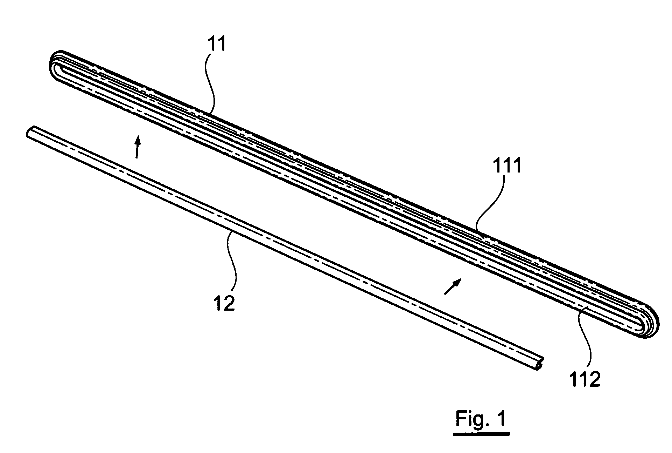

La figure 1 illustre le principe de l'invention, dans un mode de réalisation destiné à une portière. L'adaptation à une tablette arrière ou à un autre emplacement dans le véhicule est directe.

L'enjoliveur 11, réalisé par exemple en matière plastique, présente une portion 111, qui viendra prendre appui sur les bords de la garniture (formant la partie visible de l'enjoliveur), et une partie 112, s'étendant sensiblement perpendiculairement à la partie 111, et définissant plus précisément la fente par laquelle circulera la toile d'occultation. Cette portion 112 est prévue pour être introduite dans la fente définie préalablement dans la garniture.

Selon l'invention, on prévoit des agrafes 12, prévues pour venir solidariser la portion 112 de l'enjoliveur avec le bord correspondant de la garniture.

Sur la figure 1, une seule agrafe est représentée. Bien sûr, généralement, on prévoira deux agrafes 12, pour chacun des bords longitudinaux de l'enjoliveur.

Selon le mode de réalisation illustré en figure 1, l'agrafe 12 s'étend sur la plus grande partie de l'enjoliveur, et fait par exemple au moins la largeur de la toile d'occultation. Selon d'autres modes de réalisation, on pourra bien sûr prévoir plusieurs agrafes, de taille réduite, par exemple une agrafe à chacune des extrémités, ou trois agrafes réparties sur la longueur du bord de la fente.

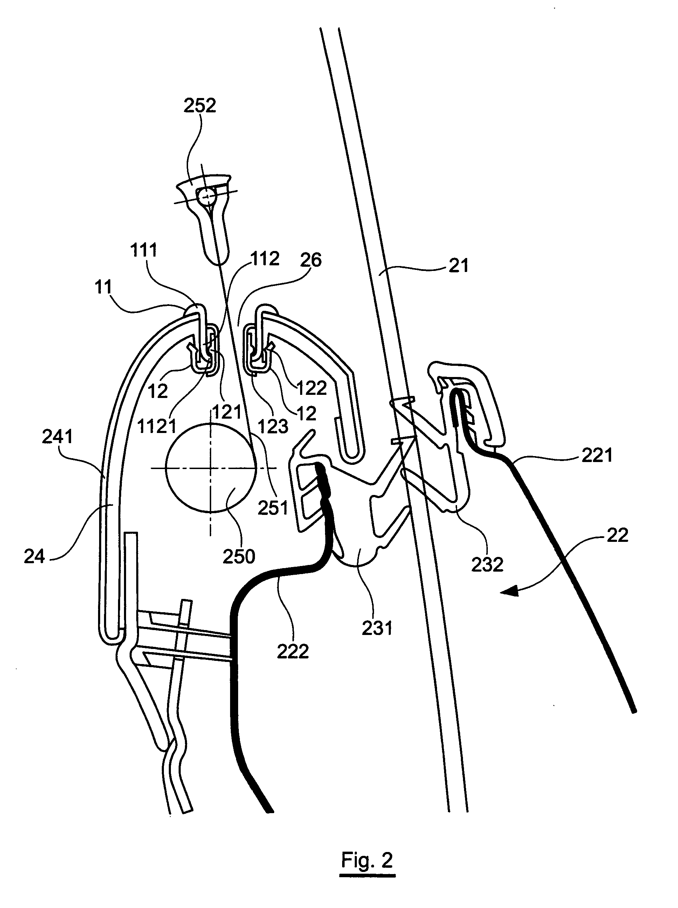

La mise en oeuvre de l'invention apparaît plus clairement sur la figure 2, qui représente, en coupe, une portion de la portière d'un véhicule. Sur cette figure 2, on distingue notamment la vitre coulissante 21 de la portière, pouvant pénétrer à l'intérieur du panneau 22 défini par un élément de tôle extérieur 221 et un élément de tôle intérieur 222 portant chacun respectivement un joint lécheur 23₁ et 23₂.

La garniture intérieure de portière 24 est solidarisée à l'élément de tôle intérieur 222. Elle porte un revêtement 241, qui rend généralement plus complexe la fixation de l'enjoliveur.

Un tube d'enroulement 250 est monté à l'intérieur de la garniture. Il porte une toile 251, dont l'extrémité libre est solidaire de moyens de tirage 252. La toile peut circuler dans la fente 26 prévue à cet effet dans la garniture 24, et définie par l'enjoliveur 11.

Cet enjoliveur 11 est donc rapporté sur la fente 26 ménagée dans la garniture.

La garniture présente deux portions verticales, définissant la fente, contre lesquelles viennent prendre position les portions 112 de l'enjoliveur 11. Selon l'invention, ces deux éléments sont solidarisés par deux agrafes 12.

Ces agrafes 12 sont conçues pour venir se clipper avec les bords 112 de l'enjoliveur et/ou l'extrémité de la garniture. Pour cela, l'agrafe peut notamment présenter un bossage 121, venant coopérer avec l'extrémité repliée 1121 de l'enjoliveur.

L'agrafe 12 comprend également une ou plusieurs pointes, ou un autre élément d'ancrage 122, venant s'accrocher à la garniture 24.

Bien entendu, de nombreux autres moyens d'ancrage assurant la même fonction, reposant sur la mise en oeuvre de bossage, de creux, d'élément en dépouille ou en contre-dépouille peuvent être mis en oeuvre pour assurer des fonctions similaires.

Par ailleurs, selon un autre aspect de l'invention, les agrafes 12 portent un revêtement 123, au moins sur la partie de leur surface susceptible de rentrer en contact avec la toile 251. Ce revêtement 123 a pour objectif de supprimer, ou à tout le moins réduire, l'usure de la toile par contact avec les bords de la fente.

Il peut notamment s'agir de feutrine, ou d'un dépôt par flocage.

## Revendications

1. Dispositif enjoliveur destiné à être monté sur une fente de passage (26) d'une toile d'occultation (251), ménagée dans la garniture (24) d'un véhicule, ledit dispositif comprenant un enjoliveur (11) présentant au moins une portion visible (111) venant prendre appui sur ladite garniture (24) et au moins une portion de maintien (112), pénétrant à l'intérieur de ladite fente (26),
**caractérisé en ce qu'**il comprend au moins une agrafe de fixation (12), venant solidariser au moins une desdites portions de maintien (112) avec un bord correspondant de ladite garniture (24).

2. Dispositif enjoliveur selon la revendication 1, **caractérisé en ce que** la ou lesdites agrafes (12) présentent, sur au moins une portion de leur surface, un revêtement de protection (123) de ladite toile (251).

3. Dispositif enjoliveur selon la revendication 2, **caractérisé en ce que** ledit revêtement (123) est de la feutrine ou un flocage.

4. Dispositif enjoliveur selon l'une quelconque des revendications 1 à 3, **caractérisé en ce que** la ou lesdites agrafes (12) sont solidarisées audit enjoliveur (11) par clippage.

5. Dispositif enjoliveur selon l'une quelconque des revendications 1 à 4, **caractérisé en ce que** la ou lesdites portions de maintien (112) comprennent des moyens d'ancrage avec la ou lesdites agrafes (12).

6. Dispositif enjoliveur selon l'une quelconque des revendications 1 à 5, **caractérisé en ce que** la ou lesdites agrafes (12) comprennent des moyens d'ancrage avec la ou lesdites portions de maintien (112).

7. Dispositif enjoliveur selon les revendications 5 et 6, **caractérisé en ce que** la ou lesdites agrafes (12) et la ou lesdites portions de maintien (112) comprennent des moyens d'ancrage complémentaires.

8. Dispositif enjoliveur selon l'une quelconque des revendications 5 à 7, **caractérisé en ce que** lesdits moyens d'ancrage comprennent des bossages, des creux, des portions en dépouille ou en contre-dépouille et/ou des portions repliées.

9. Dispositif enjoliveur selon l'une quelconque des revendications 1 à 8, **caractérisé en ce qu'**il comprend deux agrafes (12), s'étendant chacune sur la majeure partie d'un bord de ladite fente (26).

10. Dispositif enjoliveur selon l'une quelconque des revendications 1 à 9, **caractérisé en ce qu'**il est destiné à équiper une portière ou une tablette arrière dudit véhicule.

11. Agrafe (12) pour dispositif enjoliveur selon l'une quelconque des revendications 1 à 10, **caractérisée en ce qu'**elle est prévue pour solidariser au moins une portion de maintien (112) d'un enjoliveur (11) avec un bord correspondant de la garniture (24) d'un véhicule,
ledit dispositif comprenant un enjoliveur (11) présentant au moins une portion visible (111) venant prendre appui sur ladite garniture (24) et au moins une portion de maintien (112), pénétrant à l'intérieur de ladite fente (26).

12. Véhicule automobile **caractérisé en ce qu'**il comprend au moins un dispositif enjoliveur destiné à être monté sur une fente de passage (26) d'une toile d'occultation (251), ménagée dans la garniture (24) dudit véhicule, ledit dispositif comprenant un enjoliveur (11) présentant au moins une portion visible (111) venant prendre appui sur ladite garniture (24) et au moins une portion de maintien (112), pénétrant à l'intérieur de ladite fente (26),
**caractérisé en ce que** ledit dispositif comprend au moins une agrafe de fixation (12), venant solidariser au moins une desdites portions de maintien (112) avec un bord correspondant de ladite garniture (24).
